(19) Europäisches Patentamt
European Patent Office
Office européen des brevets

(11) EP 4 745 185 A1

(12) EUROPÄISCHE PATENTANMELDUNG

(43) Veröffentlichungstag:
**20.05.2026 Patentblatt 2026/21**

(21) Anmeldenummer: **24213820.4**

(22) Anmeldetag: **19.11.2024**

(51) Internationale Patentklassifikation (IPC):
***C08J 11/24*** *(2006.01)*

(52) Gemeinsame Patentklassifikation (CPC):
**C08J 11/24;** C08J 2343/04; C08J 2363/00; C08J 2383/00

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Evonik Operations GmbH**
**45128 Essen (DE)**

(72) Erfinder:
- **KNOTT, Wilfried**
  **45355 Essen (DE)**
- **DUDZIK, Horst**
  **45326 Essen (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**

# (54) VERFAHREN ZUM ABBAU VON EPOXID-HYBRIDHARZ

(57) Die Erfindung betrifft ein Verfahren zum Abbau von Epoxid-Hybridharz, welches mindestens ein chemisch eingebundenes Siloxan aufweist, wobei das mindestens eine im Epoxid-Hybridharz chemisch eingebundene Siloxan über mindestens zwei SiC-Bindungen in das Epoxid-Hybridharz chemisch eingebunden ist, und wobei der Siliziumanteil, ausgedrückt in Massenprozent Silizium, bezogen auf das gesamte Epoxid-Hybridharz

$$1{,}5 \text{ Massenprozent} \leq \text{Siliziumanteil} \leq 10 \text{ Massenprozent}$$

beträgt, wobei man das Epoxid-Hybridharz mit einem Gemisch aus mindestens einem Alkalimetallalkoholat und mindestens einem Alkohol in Kontakt bringt.

EP 4 745 185 A1

## Beschreibung

Die vorliegende Erfindung liegt auf dem Gebiet der Epoxidharze und der Silikone. Insbesondere betrifft die Erfindung ein Verfahren zum Abbau von Epoxid-Hybridharz.

Windkraftanlagen können eine wertvolle Möglichkeit zur Energiegewinnung sein. Beispielsweise sollen gemäß einer Forderung des deutschen Windenergie-auf-See-Gesetzes (WindSeeG) allein in der Bundesrepublik Deutschland bis zum Jahr 2030 Windkraftanlagen mit einer Leistung von mindestens 30 Gigawatt auf hoher See installiert werden. Bis 2035 soll die Offshore-Gesamtleistung dann auf 40 Gigawatt ansteigen und bis zum Jahr 2045 sind mindestens 70 Gigawatt geplant. Jedoch ist das Recycling der Rotorblätter von Windkraftanlagen schwierig und kann die Ökobilanz der Windkraftanlagen stören.

Den Erfordernissen genügend, dass die Turbinen von Windkraftanlagen möglichst leicht sein und die Rotorblätter selbst starke Stürme unbeschädigt überstehen sollen, stellt man einen großen Teil der heutigen Rotorblätter aus glasfaserverstärktem Kunststoff, kurz GFK genannt, her. Auch die Umhüllung des Maschinenhauses einer Windkraftanlage kann üblicherweise aus glasfaserverstärktem Kunststoff hergestellt werden. Glasfaserverstärkter Kunststoff ist ein sogenannter Glasfaserverbundwerkstoff, der sich beispielsweise dadurch auszeichnen kann, dass er ein Glasfaser-Stützgerüst aufweist, welches mit einem Kunstharz getränkt ist. Als Kunstharz für solche Glasfaserverbundwerkstoffe kann dabei z.B. Epoxidharz verwendet werden.

Die Verwertung gebrauchter oder zu entsorgender Glasfaserverbundwerkstoffe ist problematisch, da sich die Komponenten der Glasfaserverbundwerkstoffe nur sehr schwer und entsprechend kostspielig voneinander lösen lassen. Man kann daher sehr konservativ schätzen, dass z.B. bis 2025 jährlich allein Rotorblätter mit einem Gesamtgewicht von 25.000 Tonnen möglicherweise als Abfall enden. Andere Schätzungen gehen sogar von möglicherweise noch höheren Abfallmengen aus, die z.B. in einer Größenordnung von 40.000 bis 60.000 Tonnen pro Jahr liegen könnten.

Es wäre insbesondere angesichts solcher zu erwartenden Abfallmengen wünschenswert, die gebrauchten oder zu entsorgenden Glasfaserverbundwerkstoffe nicht nur dem Abfall zuzuführen, sondern sinnvoller zu verwerten. Besonders wünschenswert wäre es, die wertvollen Glasfasern möglichst intakt vom Kunstharz abtrennen zu können, um diese Glasfasern z.B. wieder zu wertvollen Folgeprodukten verarbeiten zu können und damit deren Einlagerung in Mülldeponien zu vermeiden.

Pyrolytische Verfahren, die sich im Wesentlichen auf die Rückgewinnung der Faserkomponenten beschränken, werden zum Beispiel von der Niederländischen Organisation für Angewandte Naturwissenschaftliche Forschung (TNO) in Circular Biobased Delta unter dem Titel "TNO geeft afgedankte windmolenwieken een tweede leven", Nieuwsbericht, 18.10.2022 als Repost von Romy de Weert von "Change.inc" beschrieben (Circular Biobased Delta. (18. Oktober 2022). *TNO geeft afgedankte windmolenwieken een tweede leven - Circular Biobased Delta.*

https://circularbiobaseddelta.nl/nieuws/tno-geeft-afgedankte-windmolenwieken-een-tweede-leven/), worin man auf eine Kooperation mit Brightlands Materials Center abstellt, die zu einem sauerstofffreien Pyrolyseprozess bei ungefähr 500°C geführt hat, der die Fasern des Faserverbundwerkstoffes freilegt, so dass diese in anderen Kompositwerkstoffen verarbeitet werden können. Die dabei anfallende Pyrolysekohle soll analog einer Pflanzenkohle (Biochar) zur Bodenverbesserung Verwendung finden.

Sich der Frage des Recyclings von Epoxidharz enthaltenden Erzeugnissen wie Leiterplatten und Glasfasergeweben widmend, stellt die Lehre der WO 96/16112 A1 darauf ab, die Epoxidharz enthaltenden Erzeugnisse mit einem oder mehreren polaren Lösungsmitteln in Berührung zu bringen und dadurch Anteile des Epoxidharzes in die flüssige Phase zu überführen, wobei hohe Temperaturen zwischen 140 und 280°C, dabei gegebenenfalls noch begleitet vom Einsatz von Ultraschall respektive ggf. auch Druckgefäßen (Autoklaven) bei zudem recht langen Behandlungszeiten die Attraktivität dieses Verfahrens senken.

Sich auf das Recycling der bereits verwendeten, glasfaserverstärkten Kunststoffe richtend, lehrt die WO 2023/152245 A1 ein Verfahren zur Zerlegung von epoxidbasierten Polymeren oder faserverstärkten epoxidbasierten Polymeren, wobei das Verfahren einen Schritt des Kontaktierens der epoxidbasierten Polymeren oder faserverstärkten epoxidbasierten Polymeren mit einer Toluol und einen metallorganischen Dehydrierungskatalysator enthaltenden Lösungsmittelmischung umfasst. Der darin verwendete Dehydrierungskatalysator besteht aus Ruthenium und mindestens einem dreizähnigen organischen Liganden, wie Trimethylenmethan (TMM), 1,1,1-Tris(diphenylphosphinomethyl)-ethan (Triphos) oder Tris((diphenylphosphino)methyl)amin (N-Triphos). Gemäß der in WO 2023/152245 A1 auch an Modellsystemen vorgestellten Lehre liefert die hydrierende Spaltung des jeweils zwei Bisphenol-A-Moleküle verbrückenden Glycidylrestes ($-O-CH_2$ $-CHOH-CH_2-O-$) den Faserwerkstoff (zum Beispiel die Glasfaser), in wechselnden Ausbeuten Bisphenol A und ein viskoses, braunes Öl, dessen Zusammensetzung unklar bleibt. Ob der einmal eingesetzte, kostspielige Katalysator für weitere Recyclingschritte wiederverwendet werden kann, ist fraglich. Die Kombination aus dem seltenen und kostbaren Platinmetall Ruthenium mit kostspieligen, dreizähnigen Liganden in einer toluolischen Lösung in Verbindung mit den hiervon benötigten Einsatzmengen (6 Massenprozent bezogen auf zu recycelnde Masse) sowie den zeit- und energieintensiven Prozessbedingungen (160°C/ 16 Stunden), lassen den Fachmann daran zweifeln, dass sich diese in WO2023/152245 A1 offenbarte Recyclingmethode im großen Stil und für die heute üblichen Rotorgeometrien mit

Längen von bis zu 90 Metern wird etablieren können.

Die Löslichkeit amorpher Polymilchsäure in Methylmethacrylat nutzend, haben Dorgan et al. (Dylan S. Cousins, Bin Tan, Jackson Howell, Yasuhito Suzuki, Joseph R. Samaniuk, Daniel M. Knauss und John R. Dorgan, "Styrene-Free, Partially Biobased Resin System for Thermoplastic Composites. I. Rheological Properties and Prelimininary Panel Fabrication" in ACS Sustainable Chem. Eng. 2019, 7, 7, 6512-6521, DOI:10.1021/acssuschemeng.8b04229) unter Verwendung von Glasfasern ein Epoxyharz-freies Rotorblattmaterial hergestellt. Die aus diesem kombinierten, thermoplastischen Harz hergestellten Platten waren stark und haltbar genug, um in Turbinen oder Automobilen verwendet zu werden. Die Platten konnten in frischem Monomer aufgelöst und die freigelegten Glasfasern auf physikalische Weise entfernt werden, so dass man das Material zu neuen Produkten desselben Typs umgießen konnte. Der Mangel sowohl an geeignetem als auch verfügbaren Biokunststoff schränkt die Nutzung dieses interessanten gedanklichen Ansatzes ein. Darüber hinaus können auch erst Langzeitstudien Auskunft darüber geben, inwieweit ein partiell aus pflanzlichem Polymer zusammengesetztes Kompositmaterial erfolgreich Angriffen wie zum Beispiel dem Biofouling (man denke an Offshore-Windkraft-anlagen) widerstehen kann.

Hafeezullah Memon, Yi Wei und Chengyan Zhu (Polymer Testing 105 (2022), 107420, DOI:10.1016/j.polymertesting.2021.107420) beschreiben in ihrem Reviewartikel "Recyclable and reformable epoxy resins based on dynamic covalent bonds - Present, past, and future" die Fortschritte zur Gewinnung recyclingfähiger und umformbarer Epoxyharze durch den Einbau dynamischer, kovalenter Bindungen. Neben der Nutzung der Diels-Alder- bzw. Retro-Diels-Alder-Reaktion, der Umesterung, der Knüpfung respektive Spaltung disulfidischer Bindungen, der Schiffbasen-Chemie, Boroxin-Bindungen, Hexahydro-s-triazin-Derivaten, Silyletherbindungen, Boronsäureestern, etc. weisen die Autoren in diesem Zusammenhang auf die Arbeit von X. Wu et al. (Xiao Wu, Xin Yang, Rang Yu, Xiao-Juan Zhao, Ying Zhang und Wie Huang "A facile access to stiff epoxy vitrimers with excellent mechanical properties via siloxane equilibration" in J. Mater. Chem. A, 2018, 6, 10184-10188, DOI: 10.1039/C8TA02102C) hin, die sich mit einem einfachen synthetischen Zugang zu steifen Epoxy Vitrimeren mit herausragenden mechanischen Eigenschaften beschäftigt, welche über eine Siloxanäquilibrierung gewonnen werden. Hierbei lassen X. Wu et al. ein Di-(Kalium)oligoaminopropylmethylsiloxandiolat als dynamischen Härter auf den Diglycidylether des ethoxylierten Bisphenols A einwirken und gewinnen dabei ein sogenanntes Vitrimer.

Im Kontext ihrer Untersuchung verstehen X. Wu et al. unter dem Begriff "Recycling" jedoch nicht den chemischen Abbau der Epoxy-Siloxan-Copolymerstruktur, sondern die thermisch induzierte Gleichgewichtseinstellung des Siloxananteils im Copolymer im Sinne einer durch das an das Siloxanmolekül gebundene Kaliumsiloxanolat katalysierten, dynamischen Siloxanäquilibrierung. Der dort von X. Wu et al. beschriebene Prozess ist in der Lage, Mikrorisse in der Epoxy-Siloxan-Copolymerstruktur zu heilen.

Abweichend von einem kontrollierten chemischen Abbau der Epoxy-Siloxan-Copolymerstruktur, bei welchem sich im Verlauf der Reaktion durch den hinzugegebenen Reaktanden die Anzahl der SiO-Bindungen signifikant erhöht und die mittlere Molmasse des Polymerkörpers entsprechend sinkt, bleiben bei der von X. Wu et al. beschriebenen, katalysierten dynamischen Siloxanäquilibrierung die Anzahl der SiO-Bindungen und damit verbunden auch die mittlere Molmasse des Epoxy-Siloxan-Copolymers konstant, wie man aus dem ibid. auf Seite 10185, unten dargestellten Schema 1 entnehmen kann. Insofern liefern X. Wu et al. keinerlei Hinweis auf einen kontrollierten chemischen Abbau der Epoxy-Siloxan-Copolymerstruktur im Sinne eines wirklichen, stofflichen Recyclings.

Wenyiu Wu Klingler, Valentin Rougier, Zhenyu Huang, Damdarudhar Parida, Sandro Lehner, Andri Casutt, Daniel Rentsch, Karin Brändli Hedlund, Gion Andrea Barandun, Veronique Michaud und Sabyasachi Gaan haben jüngst von einem Epoxidharz berichtet (W.W. Klingler et al. "Recyclable flame retardant phosphonated epoxy based thermosets enabled via reactive approach" in Chemical Engineering Journal 466 (2023), 143051, DOI:10.1016/j.cej.2023.143051), das eigentlich ein Duromer ist, sich im Gegensatz zu anderen Duromeren jedoch wie ein Thermoplast schmelzen lässt und durch den Einbau eines spirocyclisch strukturierten Bis-Phosphonsäureesters in die Epoxyharzmatrix gewonnen wird und somit ein sogenanntes Vitrimer darstellt. Eine reversible, thermisch induzierte Umesterungsreaktion bewirkt Öffnung oder Ringschluss des in die Polymerketten des Epoxidharzes eingebauten, spirocyclischen Phosphonates. Im Falle der Öffnung kommt es zu einer loseren Vernetzung der Polymerketten, sodass sich das Harz dann schmelzen und verformen lässt. Von der flammhemmenden Wirkung des Phosphonsäureesters auf das Epoxyharz überzeugt, erhoffen sich W.W. Klingler et al., das Prinzip so erweitern zu können, dass sie damit auch eine Lösung für das Recycling faserverstärkter Epoxyharze anbieten können. Ob ein in seinem wesentlichen Polymeraufbau integer bleibendes Harz überhaupt von einem Faservlies abgelöst werden kann, bleibt jedoch abzuwarten.

Auf Silizium-haltige Zusammensetzungen, die nach dem Aushärten durch Behandlung mit einer sauren Lösung in ihr thermoplastisches Gegenstück (d. h. nicht vernetzten Kunststoff) umgewandelt werden können, abstellend, beschäftigt sich US 2022/0356145 A1 speziell mit dem Einbau von Silizium abgeleiteten, Aminofunktionen tragenden Härtern oder Härtungsmitteln in Epoxyharz-Netzwerke und macht im Recyclingschritt Gebrauch von der sauer-hydrolytischen Instabilität der darin enthaltenen =SiOC-Bindungen. Bei den Härtern respektive Härtungsmitteln der US 2022/0356145 A1 handelt es sich stets um Verbindungen, die sich von einem einzelnen Siliziumatom ableiten. Neben difunktionellen $R_2SiO_{2/2}$- Strukturen = (D-Einheiten) und trifunktionellen $RSiO_{3/2}$- Strukturen = (T-Einheiten) finden dabei

speziell tetrafunktionelle $SiO_{4/2}$-Strukturen = (Q-Einheiten) in US 2022/0356145 A1 Verwendung, bei denen ein einzelnes Siliziumatom jeweils von 4 Sauerstoffatomen umgeben ist.

Die M-, D-, T-, Q-Nomenklatur zur Beschreibung der Baueinheiten von Organopolysiloxanen ist aus der Literatur bekannt, siehe z.B. Walter Noll, Chemie und Technologie der Silicone, Verlag Chemie GmbH, Weinheim, Seiten 1 bis 13 (1960).

Neben der Isolierung von Kohlefasern bzw. Glasfasern aus dem duroplastischen Verbundwerkstoff beschreibt US 2022/0356145 A1, dass die anfänglichen duroplastischen, silikonhaltigen Zusammensetzungen als thermoplastisches Produkt zurückgewonnen werden können und dass dieses Abbauprodukt in Kunststoffanwendungen Eingang nehmen könnte, die sich beispielsweise der Extrusionsprozesse bedienen.

WO 2021/140434 A1 lehrt, langsam reagierende, recyclingfähige Epoxy-Harzsysteme für Struktur-Kompositwerkstoffe einzusetzen, wobei deren Härterkomponente wenigstens eine spaltbare Bindung aufweist, die sich entweder von der der Acetalgruppierung, der Ketalgruppierung der Formalgruppierung, der Orthoester-Gruppierung, der Orthocarbonat-Gruppierung oder insbesondere der Siloxybindung (=SiOC-Bindung) herleitet. In einem Beispiel der WO 2021/140434 A1 heißt es, dass sich der unter Nutzung von Tris(2-aminobutoxy)methylsilan als Härter hergestellte Epoxyharz-Glasfaserverbundwerkstoff in 3 Stunden bei 80°C in Essigsäure so auflösen lässt, dass neben dem wiederverwertbaren Glasfaservlies und anderer Stützkomponenten nach Neutralisation und Koagulation der abgetrennten Harzkörperlösung ein thermoplastisches Polymer isoliert wird.

Die schwer vorhersehbare Neigung zur Spaltung der hydrolytisch äußerst labilen =SiOC-Bindungen machen diese molekularen Sollbruchstellen jedoch zu einem Risiko in Bezug auf Haltbarkeit und Lebensdauer des Verbundwerkstoffes, so dass bei Einsatz dieser Technologien dem Beschichtungslack eine besondere Sicherheitsfunktion zukommt. Insbesondere sind die Rotorblätter von Großwindanlagen bei hoher mechanischer Belastung über Jahre und Jahrzehnte der Abrasion und Witterungseinflüssen wie starken Temperaturwechseln sowie UV-Strahlung verbunden mit Änderungen der Luftfeuchtigkeit ausgesetzt. Diese schädigenden Einflüsse vergrößern sich bei der Off-Shore-Aufstellung von Windkraftanlagen nochmals deutlich.

Der Recyclinggedanke wäre dagegen vom Wunsch getragen, die Delamination, das Debonding beziehungsweise die strukturelle Auflösung des harzdurchtränkten Verbundwerkstoffes vorzugsweise wirklich erst dann vorzunehmen, wenn die technische Lebensdauer des daraus gefertigten Gegenstandes erreicht ist. Vor Ablauf der geplanten Nutzung soll es vorzugsweise nicht zu einer Schädigung oder Desintegration des Faserverbundwerkstoffes unter Verlust der mechanischen Festigkeit kommen. Die durch den Auflösungsprozess eingeleitete Wiederverwertung des Faserverbundwerkstoffes soll somit vorzugsweise willkürlich (on-demand) schaltbar sein. Die Begriffe der Delamination und des Debonding sind dem Fachmann bekannt. So umfasst die Delamination vorzugsweise die Enthaftung, z.B. den Vorgang des sich-Ablösens von Schichten in Verbundwerkstoffen, besonders bevorzugt in Faserverbundwerkstoffen. Debonding bedeutet vorzugsweise Verlust der Adhäsion zwischen Fasern bzw. Fasergeweben und einer Verbundwerkstoffmatrix, wie z.B. einem Epoxidharz.

EP4349884 A1 beschreibt ein Verfahren zur Herstellung von einem oder mehreren Alkoxysiloxanen durch thermische Umsetzung von einem Abfallsilikon mit einem Alkalimetallalkoholat und einem Alkohol. In einem ersten Schritt wird in EP4349884 A1 das Abfallsilikon unter Durchmischung mit einem Alkohol und einem Alkalimetallalkoholat unter Wärmeeintrag umgesetzt, und zwar ohne Entfernung von etwaig auftretendem Wasser aus der Reaktionsmischung, insbesondere ohne den Einsatz von mit Wasser Azeotrope bildenden Solventien und/oder ohne den Einsatz weiterer, wasserentziehender Mittel. Das aus dieser Reaktion hervorgehende Reaktionsgemisch wird in einem zweiten Schritt gemäß EP4349884 A1 mit Hilfe von mindestens einer Brönstedsäure gegebenenfalls unter Hinzufügen von einem Solvens neutralisiert, die festen Bestandteile werden abtrennt, insbesondere abfiltriert, und danach werden das oder die Alkoxysiloxane durch thermisches Abtrennen flüchtiger Verbindungen isoliert.

EP4349882 A1 beschäftigt sich mit einem Verfahren zur Herstellung von einem oder mehreren Alkoxysiloxanen durch thermische Umsetzung von Siloxangrundkörpern mit einem Alkalimetallalkoholat und einem Alkohol, wobei man in einem ersten Schritt den Siloxangrundkörper unter Durchmischung mit einem Alkohol und einem Alkalimetallalkoholat unter Wärmeeintrag umsetzt, und zwar ohne Entfernung von etwaig auftretendem Wasser aus der Reaktionsmischung, insbesondere ohne den Einsatz von mit Wasser Azeotrope bildenden Solventien und/oder ohne den Einsatz weiterer, wasserentziehender Mittel, und die aus dem ersten Schritt hervorgegangene Reaktionsmischung in einem zweiten Schritt durch Hinzufügen einer Brönstedsäure und gegebenenfalls unter Hinzufügen von einem Solvens neutralisiert, vorzugsweise feste Bestandteile abfiltriert und danach das oder die Alkoxysiloxane durch thermisches Abtrennen flüchtiger Verbindungen isoliert, und wobei der Siloxangrundkörper ausgewählt ist aus der Gruppe bestehend aus Hexamethylcyclotrisiloxan ($D_3$), Octamethylcyclotetrasiloxan ($D_4$), Dekamethylcyclopentasiloxan ($D_5$), Dodekamethylcyclohexasiloxan ($D_6$), Mischungen zyklischerverzweigter Siloxane vom D/T-Typ, Silikonöle, Polydimethylsiloxandiole und $\alpha,\omega$-Divinyisiioxane.

Epoxy-Hybridharze, die man mit niedermolekularen Siloxanen modifiziert hat, werden bereits von Henryk Galina, Hieronim Maciejewski und Piotr Murias in "Epoxy resins modified with reactive low molecular weight siloxanes" in European Polymer Journal 48 (2012), 769-773, DOI:10.1016/j.eurpolymj.2012.01.009) beschrieben, wobei dort als

organisches Epoxyharzsystem kommerzielles Epoxyharz Epidian®6 kombiniert mit Triethylentetramin als Härter mit Anteilen von jeweils 3, 5, 10 oder 15 Gewichtsprozent an Siloxanmodifizierer versetzt wird, wobei als Siloxanmodifizierer 1,3-Bis(glycidyloxypropyl)-1,1,3,3-tetramethyldisiloxan beziehungsweise 1,3-Bis(aminopropyl)-1,1,3,3-tetramethyldisiloxan zum Einsatz gelangen und dabei jeweils ihrer Menge entsprechend Anteile des organischen Epoxyharzes respektive der Aminhärterkomponente ersetzen, und wobei die so gewonnenen Siloxan-modifizierten Epoxyharzrezepturen homogenisiert und sowohl für 24 Stunden bei Raumtemperatur als auch zur Nachhärtung bei 100°C für 5 Stunden behandelt und danach ausgiebigen mechanischen Tests unterzogen werden. Die Autoren Henryk Galina, Hieronim Maciejewski und Piotr Murias zeigen auf, dass sowohl die vorgenommene Diepoxy- als auch die Diaminodisiloxane-Modifizierung in Abhängigkeit von der jeweils zugefügten Siloxanmenge die Glasübergangstemperatur des erhaltenen Polymers erniedrigen, die Biegefestigkeit als auch den dynamischen Schubmodul reduzieren, jedoch die Schlagfestigkeit des erhaltenen Epoxy-Siloxan-Hybridharzes erhöhen.

Vor diesem Hintergrund kann beispielsweise eine allgemeine Herausforderung darin gesehen werden, sich mit dem Abbau von Epoxid-Hybridharz auseinanderzusetzen, vorzugsweise z.B. mit Blick auf das mögliche Recycling von Epoxid-Hybridharz basierten Verbundwerkstoffen, besonders bevorzugt z.B. mit Blick auf das mögliche Recycling von Epoxid-Hybridharz basierten Verbundwerkstoffe enthaltenden Rotorblättern von Windkraftanlagen.

Konkrete Aufgabe der vorliegenden Erfindung war es, einen Beitrag zum Abbau von Epoxid-Hybridharz zu leisten, vorzugsweise ein Verfahren zum Abbau von Epoxid-Hybridharz bereitzustellen, welches den Abbau von Epoxid-Hybridharz, das mindestens ein über mindestens zwei SiC-Bindungen in das Epoxid-Hybridharz chemisch eingebundenes Siloxan sowie einen bestimmten Siliziumanteil aufweist, und/oder welches vorzugsweise auch den Abbau von Verbundwerkstoffen, welche solches Epoxid-Hybridharz und beispielsweise Fasern, wie z.B. Glasfasern, enthalten, ermöglichen kann. Das erfindungsgemäß abzubauende Epoxid-Hybridharz ist ein ausgehärtetes Epoxid-Hybridharz.

Diese Aufgabe wird vom Gegenstand der Erfindung gelöst. Der Gegenstand der Erfindung ist Verfahren zum Abbau von Epoxid-Hybridharz, welches mindestens ein chemisch eingebundenes Siloxan aufweist,

wobei das mindestens eine im Epoxid-Hybridharz chemisch eingebundene Siloxan über mindestens zwei SiC-Bindungen in das Epoxid-Hybridharz chemisch eingebunden ist und wobei der gesamte Siliziumanteil, ausgedrückt in Massenprozent Silizium, bezogen auf das gesamte Epoxid- Hybridharz

1,5 Massenprozent $\leq$ Siliziumanteil $\leq$ 10 Massenprozent

beträgt,

wobei man das Epoxid-Hybridharz mit einem Gemisch aus mindestens einem Alkalimetallalkoholat und mindestens einem Alkohol in Kontakt bringt.

Erstaunlicherweise wurde von den Erfindern gefunden, dass derartige Epoxid-Hybridharze nicht nur ideale Kandidaten zur Herstellung von Faserverbundwerkstoffen, vorzugsweise von Glasfaserverbundwerkstoffen, sein können, sondern insbesondere auch den Aspekt deren Wiederverwendbarkeit adressieren können, in dem Sinne, dass durch den erfindungsgemäßen Abbau von Epoxid-Hybridharz z.B. die Rückgewinnung von Glasfasern aus entsprechenden Glasfaserverbundwerkstoffen, welche solches Epoxid-Hybridharz beinhalten, möglich gemacht werden kann.

Der erfindungsgemäße Abbau von Epoxid-Hybridharz wird ermöglicht über die erfindungsgemäß induzierte Spaltung von SiOSi-Bindungen im Epoxid-Hybridharz, welche vorzugsweise eine Dekomposition des Epoxid-Hybridharzes bewirkt. Dies kann dann auch den Abbau zuvor genannter Verbundwerkstoffe ermöglichen, wobei die erfindungsgemäß induzierte Spaltung von SiOSi-Bindungen im Epoxid-Hybridharz zur Delamination und zum Debonding im Verbundwerkstoff führt.

Unter "Epoxid-Hybridharz" wird im Sinne dieser Erfindung ausgehärtetes Epoxid-Hybridharz verstanden, welches mindestens ein über mindestens zwei SiC-Bindungen in das Epoxid-Hybridharz chemisch eingebundenes Siloxan aufweist. Hierbei kann man sich z.B. die bekannte Reaktion zwischen Epoxiden und Aminen zu Nutze machen. Die zu diesem Zwecke erfindungsgemäß bevorzugt einsetzbaren, linearen Reaktivsiloxane besitzen vorzugsweise in ihren Termini Epoxy- und/oder primäre Aminogruppen-tragende Reste, wobei diese mit einem über eine SiC-Bindung an den Organopolysiloxanylrest gebundenen, zweibindigen, gegebenenfalls auch noch Heteroatome, wie vorzugsweise Sauerstoff und/ oder Stickstoff enthaltenden Kohlenwasserstoffkoppler, der aliphatisch, aliphatisch-cyoaliphatisch oder aromatisch sein kann, verknüpft sind.

Unter Siloxan wird im Sinne dieser Erfindung vorzugsweise ein Organopolysiloxan verstanden, d.h. eine Verbindung, welche mindestens eine SiOSi-Gruppierung aufweist, wobei der in der SiOSi-Gruppierung enthaltene Sauerstoff bevorzugt Strukturelemente des Typs ($-R_2Si-$) miteinander verknüpft, wobei R jeweils unabhängig voneinander ausgewählt ist aus der Gruppe bestehend aus aliphatischen und aromatischen Resten, bevorzugt ist R jeweils unabhängig voneinander ausgewählt aus der Gruppe bestehend aus Methyl, Ethyl und Phenyl. Unter Organopolysiloxanylrest wird im Sinne dieser Erfindung dementsprechend ein vom Organopolysiloxan abgeleiteter, zweibindiger Rest verstanden, der vorzugsweise folgende Struktur besitzt:

$$-R_2Si-(OR_2Si)x-OSiR_2-$$

wobei R jeweils unabhängig voneinander ausgewählt aus der Gruppe bestehend aus aliphatischen und aromatischen Resten, bevorzugt ist R jeweils unabhängig voneinander ausgewählt aus der Gruppe bestehend aus Methyl, Ethyl und Phenyl,

und wobei für x gilt: $0 \leq x \leq 8$, bevorzugt $0 \leq x \leq 5$, besonders bevorzugt $x = 0$

Unter Reaktivsiloxan wird im Sinne dieser Erfindung vorzugsweise ein lineares Organopolysiloxan verstanden, welches bevorzugt in seinen Termini Epoxy- und/oder primäre Aminogruppen-tragende Reste aufweist, wobei diese mit einem über eine SiC-Bindung an den Organopolysiloxanylrest gebundenen, zweibindigen, gegebenenfalls auch noch Heteroatome, wie vorzugsweise Sauerstoff und/ oder Stickstoff enthaltenden Kohlenwasserstoffkoppler, der aliphatisch, aliphatisch-cyloaliphatisch oder aromatisch sein kann, verknüpft sind.

Unter Kohlenwasserstoffkoppler wird im Sinne dieser Erfindung vorzugsweise der über eine SiC-Bindung an den Organopolysiloxanylrest gebundene, zweibindige, gegebenenfalls auch noch Heteroatome, wie vorzugsweise Sauerstoff und/ oder Stickstoff enthaltende Koppler, der aliphatisch, aliphatisch-cyloaliphatisch oder aromatisch sein kann und vorzugsweise Epoxy- und/oder primäre Aminogruppen-Reste trägt, verstanden. Dieser Koppler verbrückt also jeweils den Organopolysiloxanylrest mit dem jeweiligen reaktiven Terminus, vorzugsweise dem Epoxy- und/oder primäre Aminogruppen-tragenden Terminus.

Um zu dem erfindungsgemäßen "Epoxid-Hybridharz" zu gelangen, kann z.B. durch die Umsetzung mit einer organischen Epoxidkomponente und/ oder einer organischen Aminkomponente das mindestens eine Reaktivsiloxan dabei über mindestens zwei SiC-Bindungen chemisch in das entstehende Epoxid-Hybridharz eingebunden werden. Das resultierende Epoxid-Hybridharz, in welches dann mindestens ein Siloxan chemisch eingebunden ist, kann danach ausgehärtet werden, so dass dann ein ausgehärtetes Epoxid-Hybridharz vorliegt. Das erfindungsgemäße "Epoxid-Hybridharz" ist ein ausgehärtetes Epoxid-Hybridharz.

Der Begriff "Hybridharz" bringt im Sinne dieser Erfindung zum Ausdruck, dass das Epoxid-Hybridharz auf molekularer Ebene chemisch mit mindestens einem Siloxan verknüpft ist, wobei das mindestens eine Siloxan dabei über mindestens zwei SiC-Bindungen in das Epoxid-Hybridharz chemisch eingebunden ist.

Die Bereitstellung ausgehärteter Epoxidharze ist dem Fachmann wohlbekannt und bedarf keiner näheren Erläuterung mehr. Sie kann z.B. auf hinlänglich bekannte Weise durch Umsetzung von sogenannten Epoxidkomponenten mit mindestens einem Härter, vorzugsweise mindestens einer organischen Aminkomponente, und anschließendem Aushärten erfolgen. Durch das Aushärten resultiert dann vorzugsweise ein sogenannter Formstoff, da mit der Aushärtung vorzugsweise eine Formgebung einher geht, so dass ein ausgehärtetes Epoxidharz vorzugsweise auch als Epoxidharz-Formstoff bezeichnet werden kann.

Das erfindungsgemäße "Epoxid-Hybridharz" kann demgemäß vorzugsweise auch als Epoxid-Hybridharz-Formstoff bezeichnet werden, in welchem erfindungsgemäß mindestens ein Siloxan chemisch eingebunden ist.

Das erfindungsgemäß abzubauende Epoxid-Hybridharz ist ein ausgehärtetes Epoxid-Hybridharz und zeichnet sich dadurch aus, dass es mindestens ein im Epoxid-Hybridharz chemisch eingebundenes Siloxan aufweist, wobei das mindestens eine Siloxan über mindestens zwei SiC-Bindungen in das Epoxid-Hybridharz chemisch eingebunden ist.

Erfindungsgemäß bevorzugte, für das chemische Einbinden ins Epoxid-Hybridharz geeignete, Siloxane sind Reaktivsiloxane. Erfindungsgemäß bevorzugte Reaktivsiloxane sind z.B. solche Organopolysiloxane, welche im Folgenden näher beschrieben sind.

Ein erfindungsgemäß bevorzugtes Verfahren zeichnet sich dadurch aus, dass das Epoxid-Hybridharz das Reaktionsprodukt von mindestens einer Epoxid-Harzmasse und mindestens einem Organopolysiloxan, ausgewählt aus der Gruppe bestehend aus Verbindungen der Formeln (I) und (II)

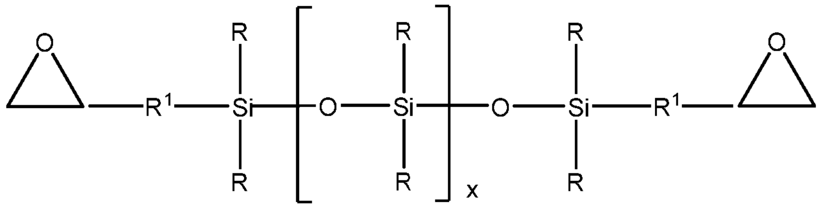

Formel (I),

und

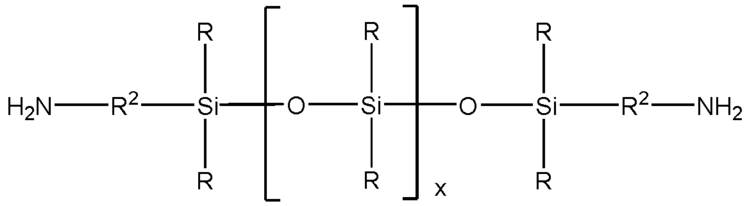

Formel (II),

wobei gilt

R ist jeweils unabhängig voneinander ausgewählt aus der Gruppe bestehend aus aliphatischen und aromatischen Resten, bevorzugt ist R jeweils unabhängig voneinander ausgewählt aus der Gruppe bestehend aus Methyl, Ethyl und Phenyl,

$R^1$ steht jeweils unabhängig voneinander für einen über eine SiC-Bindung an den Organopolysiloxanylrest gebundenen, zweibindigen, gegebenenfalls auch noch Heteroatome, wie vorzugsweise Sauerstoff und/ oder Stickstoff enthaltenden Kohlenwasserstoffkoppler, der aliphatisch, aliphatisch-cyoaliphatisch oder aromatisch sein kann,

$R^2$ steht jeweils unabhängig voneinander für einen über eine SiC-Bindung an den Organopolysiloxanylrest gebundenen, zweibindigen, gegebenenfalls auch noch Heteroatome, wie vorzugsweise Sauerstoff und/ oder Stickstoff enthaltenden Kohlenwasserstoffkoppler, der aliphatisch, aliphatisch-cyoaliphatisch oder aromatisch sein kann,

und wobei für x, jeweils unabhängig voneinander gilt: $0 \leq x \leq 8$, bevorzugt $0 \leq x \leq 5$, besonders bevorzugt $x = 0$, ist.

Erfindungsgemäß bevorzugt kann das erfindungsgemäß abzubauende Epoxid-Hybridharz z.B. dadurch erhalten werden, dass das mindestens eine Siloxan, welches in das Epoxid-Hybridharz chemisch eingebunden werden soll, in eine z.B. aus organischer Epoxidkomponente und organischer Aminkomponente bestehende Epoxid-Harzmasse eingebracht, vermischt und mit dieser durchgehärtet wird. Erfindungsgemäß bevorzugt können dabei optional beispielsweise weiterhin noch ein oder mehr als ein für die Herstellung von Epoxidharzen üblicher Zusatzstoff, wie z.B. Beschleuniger, Antioxidantien, Wärmestabilisatoren, Lichtschutzmittel bzw. UV-Stablisatoren, Biozide, Tenside, Lösungsmittel, Farbstoffe, Füllstoffe oder Mischungen aus diesen, miteingesetzt werden. Der Einsatz solcher Zusatzstoffe ist rein fakultativ.

Organische Epoxidkomponenten für die Herstellung von Epoxidharzen sind dem Fachmann aus dem Stand der Technik wohlbekannt. Erfindungsgemäß bevorzugte organische Epoxidkomponenten können z.B. umfassen, vorzugsweise sein: die Diglycidylether der bekannten Bisphenole, wie z.B. die Diglycidylether von Bisphenol A, Bisphenol AP, Bisphenol AF, Bisphenol B , Bisphenol BP, Bisphenol C, Bisphenol E, Bisphenol F, Bisphenol G , Bisphenol M, Bisphenol S, Bisphenol P, Bisphenol PH, Bisphenol TMC, Bisphenol Z, deren Derivate, jeweils allein oder beliebige Mischungen solcher, sowie vorzugsweise ggf. zusätzlich die bevorzugt als Reaktivverdünner einsetzbaren Epoxy-funktionellen Verbindungen, wie z.B. 1,4-Butandioldiglycidylether, Neopentylglycoldiglycidylether, Hexandioldiglycidylether, Cyclohexandimethanoldiglycidylether, Trimethylolpropandi- oder triglycidyl ether, Phenylglycidylether, Cresylglycidylether, Guiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, Glycidylether der C8 bis C10 Alkohole, Glycidylether

der C12- bis C14- Alkohole, Glycidylether der C13- bis C15- Alkohole, jeweils allein oder beliebige Mischungen solcher. Bei den Reaktivverdünnern sind C12-C14-Alkylglycidylether und 1,4-Butandioldiglycidylether sowie deren Mischungen erfindungsgemäß besonders bevorzugt.

Organische Aminkomponenten für die Herstellung von Epoxidharzen sind dem Fachmann aus dem Stand der Technik ebenfalls wohlbekannt. Erfindungsgemäß bevorzugte organische Aminkomponenten können z.B. umfassen, vorzugsweise sein:

(a) aliphatische, cycloaliphatische oder arylaliphatische Polyamine mit einer primären und mindestens einer sekundären Aminogruppe jeweils allein oder deren Gemische, vorzugsweise N-Benzyl-1,2-ethanediamin, N-Benzyl-1,2-propanediamin, N-Benzyl-2-methyl-1,5-pentanediamin, N-Benzyl-1,3-bis(aminomethyl)benzol, N-(2-Ethylhexyl)-1,3-bis(aminomethyl)benzol, 2-Aminoethylpiperazin, 3-Dimethylaminopropylamin (DMAPA), 3-(3-(Dimethylamino)propylamino)propylamin (DMAPAPA), N-Benzyldiethylenetriamin, N-Benzyltriethylenetetramin, N"-Benzyl-N,N'-bis(3-aminopropyl)ethylenediamin oder Additionsprodukte dieser Polyamine mit Monoepoxiden oder Diepoxiden, jeweils allein oder Gemische aus vorgenannten;
(b) aliphatische, cycloaliphatische oder arylaliphatische Polyamine mit mindestens zwei primären Aminogruppen jeweils allein oder deren Mischungen, vorzugsweise 2,2-Dimethyl-1,3-propanediamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethyl-1,6-hexandiamin (TMD), 1,7-Heptandiamin, 1,8-Octandiamine, 1,9-nonandiamin, 1,10-Decandiamin, 1,11-Undecandiamin, 1,12-Dodecandiamin, 1,2-, 1,3- oder 1,4-Diaminocyclohexan, 1,3-Bis(aminomethyl)cyclohexan, 1,4-Bis(aminomethyl)-cyclohexan, Bis(4-aminocyclohexyl) methan, Bis(4-amino-3-methylcyclohexyl)-methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA, wie z.B. VESTAMIN® IPD und VESTAMIN® IPD eCO von Evonik), 2(4)-Methyl-1,3-diaminocyclohexan, 2,5(2,6)-Bis(aminomethyl)bicyclo[2.2.1]heptan (NBDA), 3(4),8(9)-Bis(aminomethyl)tricyclo[5.2.1.02,6 ]decan, 1,4-diamino-2,2,6-trimethylcyclohexan (TMCDA), 1,8-Menthanediamin, 3,9-Bis(3-aminopropyl)-2,4,8,10-tetraoxaspiro[5.5]undecan, m-Xylylendiamin (MXDA), p-Xylylendiamin, Bis(2-aminoethyl)ether, 3,6-Dioxaoctan-1,8-diamin, 4,7-Dioxadecan-1,10-diamine, 4,7-Dioxadecan-2,9-diamin, 4,9-Dioxadodecan-1,12-diamin, 5,8-Dioxadodecane-3,10-diamin, 4,7,10-Trioxatridecan-1,13-diamin oder höhere Oligomere dieser Diamine, Bis(3-aminopropyl)polytetrahydrofuran oder andere Polytetrahydrofurandiamine, Polyoxyalkylen di- or - triamine, insbesondere Jeffamine® D-230, Jeffamine® D-400, Jeffamine® D-2000, Jeffamine® EDR-104, Jeffamine® EDR-148, Jeffamine® EDR-176, Jeffamine® T-403, Jeffamine® T-3000 or Jeffamine® T-5000 (alle von der Firma Huntsman), Bis(6-aminohexyl)amin (BHMT), Diethylentriamin (DETA), Triethylentetramin (TETA), Tetraethylenpentamin (TEPA), Pentaethylenhexamin (PEHA) oder hiervon abgeleitete, höhere Homologe, Dipropylentriamin (DPTA), N-(2-Aminoethyl)-1,3-propandiamin (N3-Amine), N,N'-bis(3-Aminopropyl)ethylenediamin (N4-Amine), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin oder Additionsprodukte dieser Polyamine mit Monoepoxiden oder Diepoxiden, jeweils allein oder Gemische aus vorgenannten;
(c) N-Benzyl-1,2-ethandiamin, N-Benzyl-1,2-propandiamin, TMD, 1,2-, 1,3- or 1,4-Diaminocyclohexan, 1,3-Bis(aminomethyl)cyclohexan, 1,4-Bis(aminomethyl)cyclohexan, Bis(4-aminocyclohexyl)methan, IPDA, 2(4)-Methyl-1,3-diaminocyclohexan , Polyoxypropylendiamin mit einem mittleren Molekulargewicht Mn im Bereich von 170 to 500 g/mol, Polyoxypropylentriamin mit einem mittleren Molekulargewicht Mn im Bereich von 300 bis 500 g/mol, TETA, TEPA, PEHA, N4-Amine, jeweils allein oder Gemische aus vorgenannten;
oder
(d) beliebige Gemische aus den vorgenannten Gruppen (a) bis (c).

Unter Epoxid-Harzmasse wird im Sinne dieser Erfindung vorzugsweise eine Mischung umfassend, bevorzugt bestehend aus mindestens einer organischen Epoxidkomponente und mindestens einer organischen Aminkomponente verstanden. Erfindungsgemäß bevorzugt können der Epoxid-Harzmasse optional beispielsweise weiterhin noch ein oder mehr als ein für die Herstellung von Epoxidharzen üblicher Zusatzstoff, wie z.B. Beschleuniger, Antioxidantien, Wärmestabilisatoren, Lichtschutzmittel bzw. UV-Stablisatoren, Biozide, Tenside, Lösungsmittel, Farbstoffe, Füllstoffe oder Mischungen aus diesen, zugeschlagen werden bzw. können optional in der Epoxid-Harzmasse enthalten sein. Der Einsatz solcher Zusatzstoffe ist rein fakultativ.

Um zu erfindungsgemäß bevorzugten Epoxid-Hybridharzen zu gelangen, können z.B. zu der betreffenden Epoxid-Harzmasse vor Erreichen vollständiger Aushärtung jeweils mit Epoxy- und/ oder mit Aminendgruppen versehenes Reaktivsiloxan hinzugefügt werden, so dass auf diese Weise und nach Aushärtung das erfindungsgemäße Epoxid-Hybridharz entstehen kann.

Erfindungsgemäß bevorzugt kann das erfindungsgemäß abzubauende Epoxid-Hybridharz z.B. auch dadurch

erhalten werden, dass man eine organische Epoxidkomponente ausschließlich mit einem Aminogruppen-aufweisenden Organosiloxan reagieren lässt, so dass auf diese Weise und nach Aushärtung das erfindungsgemäße Epoxid-Hybridharz entstehen kann.

Erfindungsgemäß bevorzugt kann das erfindungsgemäß abzubauende Epoxid-Hybridharz z.B. auch dadurch erhalten werden, dass man eine organische Epoxidkomponente zunächst mit einem Aminogruppen-aufweisenden Organopolysiloxan vorreagieren lässt, bevor man das auf diese Weise gebildete Präpolymer dann mit einer organischen Aminkomponente vermischt, so dass auf diese Weise und nach Aushärtung das erfindungsgemäße Epoxid-Hybridharz entstehen kann.

Erfindungsgemäß bevorzugt kann das erfindungsgemäß abzubauende Epoxid-Hybridharz z.B. auch dadurch erhalten werden, dass man eine organische Aminkomponente zunächst mit einem Epoxygruppen-aufweisenden Organopolysiloxan vorreagieren lässt, bevor man das auf diese Weise gebildete Präpolymer dann mit der organischen Epoxidkomponente vermischt, so dass auf diese Weise und nach Aushärtung das erfindungsgemäße Epoxid-Hybridharz entstehen kann.

Erfindungsgemäß ist es bevorzugt, wenn beispielsweise neben dem Einsatz der vorzugsweise einsetzbaren Diglycidylether der bekannten Bisphenole als Epoxidkomponenten zusätzlich weitere Epoxy-funktionelle Verbindungen als Reaktivverdünner zum Einsatz gelangen, insbesondere zur Einstellung der Rheologie des Epoxidhybridharzes.

Zur Herstellung des erfindungsgemäß abzubauenden Epoxid-Hybridharzes bevorzugt einsetzbar sind

(a) mindestens ein Epoxygruppen-aufweisendes Organopolysiloxan, gemäß folgender Formel

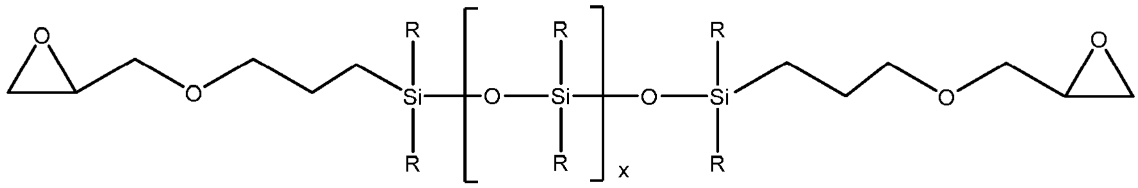

,

wobei die Reste R jeweils unabhängig voneinander ausgewählt sind aus der Gruppe bestehend aus Methyl, Ethyl und Phenyl, und wobei für x gilt: $0 \leq x \leq 8$, bevorzugt $0 \leq x \leq 5$, besonders bevorzugt x = 0,
und/oder

(b) mindestens ein Aminogruppen-aufweisendes Organopolysiloxan gemäß folgender Formel

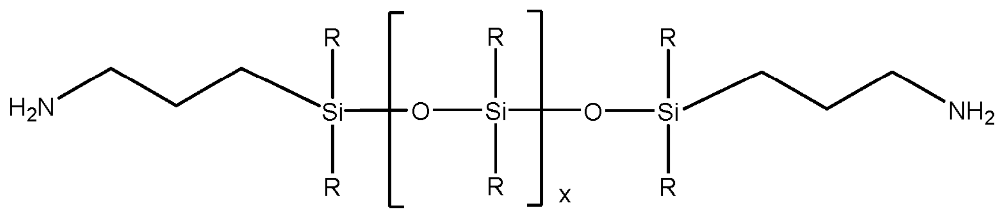

,

wobei die Reste R jeweils unabhängig voneinander ausgewählt sind aus der Gruppe bestehend aus Methyl, Ethyl und Phenyl, und wobei für x gilt: $0 \leq x \leq 8$, bevorzugt $0 \leq x \leq 5$, besonders bevorzugt x = 0

Zur Herstellung des erfindungsgemäß abzubauenden Epoxid-Hybridharzes ebenfalls bevorzugt einsetzbar ist mindestens ein Epoxygruppen-aufweisendes Organopolysiloxan der allgemeinen Formel:

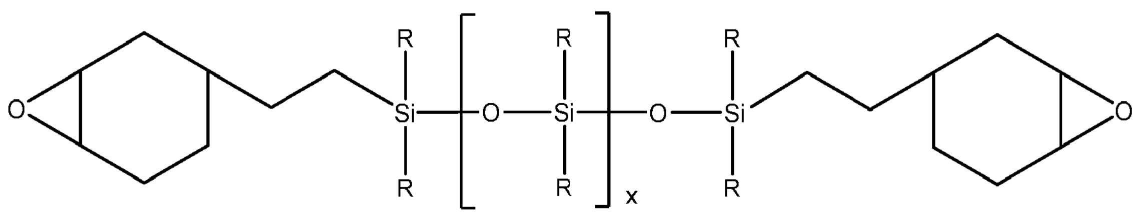

, mit R jeweils unabhängig voneinander ausgewählt aus der Gruppe bestehend aus aliphatischen und aromatischen Resten, bevorzugt ist R jeweils unabhängig voneinander ausgewählt aus der Gruppe bestehend aus Methyl, Ethyl und Phenyl, und wobei für x gilt: $0 \leq x \leq 8$, bevorzugt $0 \leq x \leq 5$, besonders bevorzugt x = 0.

Zur Herstellung des erfindungsgemäß abzubauenden Epoxid-Hybridharzes ebenfalls bevorzugt einsetzbar ist mindestens ein Aminogruppen-aufweisendes Organopolysiloxan der allgemeinen Formel

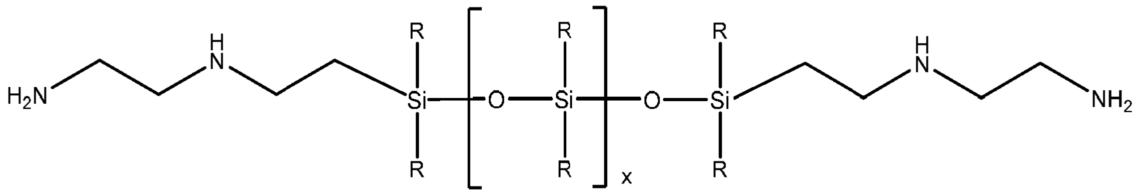

mit R jeweils unabhängig voneinander ausgewählt aus der Gruppe bestehend aus aliphatischen und aromatischen Resten, bevorzugt ist R jeweils unabhängig voneinander ausgewählt aus der Gruppe bestehend aus Methyl, Ethyl und Phenyl, und wobei für x gilt: $0 \leq x \leq 8$, bevorzugt $0 \leq x \leq 5$, besonders bevorzugt $x = 0$.

Ein erfindungsgemäß bevorzugtes Verfahren zeichnet sich dadurch aus, dass das erfindungsgemäß abzubauende Epoxid-Hybridharz das Reaktionsprodukt von mindestens einer Epoxid-Harzmasse und mindestens einem Organopolysiloxan ausgewählt aus der Gruppe bestehend aus Verbindungen der Formeln (III), (IV), (V) und (VI)

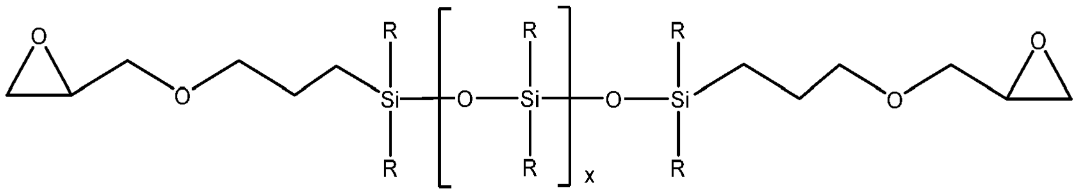

Formel (III),

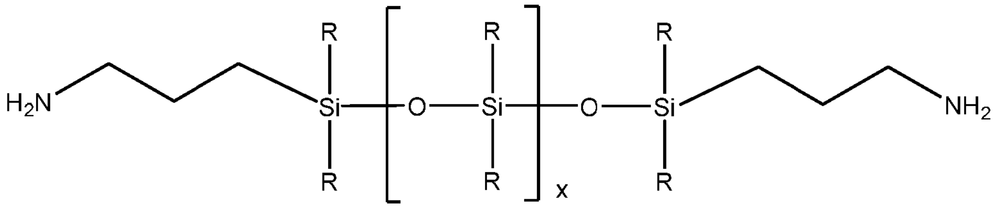

Formel (IV),

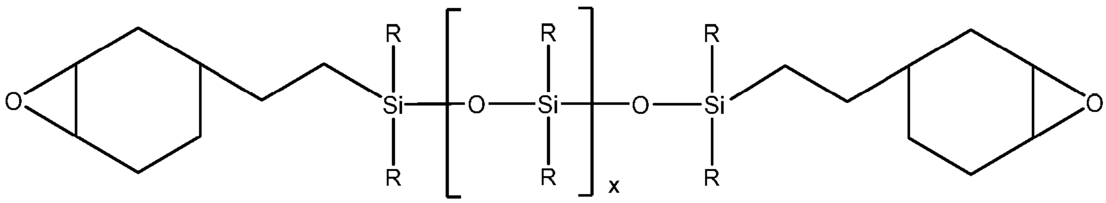

Formel (V)

und

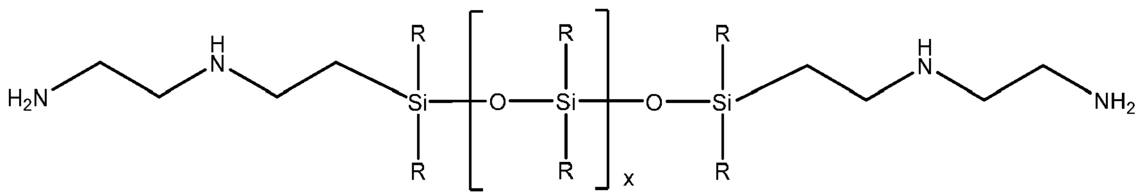

Formel (VI),

wobei gilt

R ist jeweils unabhängig voneinander ausgewählt aus der Gruppe bestehend aus aliphatischen und aromatischen Resten, bevorzugt ist R jeweils unabhängig voneinander ausgewählt aus der Gruppe bestehend aus Methyl, Ethyl und Phenyl,

und wobei für x, jeweils unabhängig voneinander gilt: $0 \leq x \leq 8$, bevorzugt $0 \leq x \leq 5$, besonders bevorzugt x = 0, ist.

Das erfindungsgemäß abzubauende Epoxid-Hybridharz eignet sich vorzugsweise als Matrixwerkstoff für Glasfaser-Verbundwerkstoffe. Es eignet sich bevorzugt für das Behandeln, vorzugsweise Durchtränken und/oder Umgießen, von Fasern, vorzugsweise von Faservliesen und/oder Fasermatten, wie zum Beispiel Glasfaser- und/oder Carbonfaservliesen, und damit zum Aufbau von Kompositwerkstoffen, die vorzugsweise Eingang in anspruchsvolle technische Anwendungen, wie zum Beispiel den Bau von Rotorblättern für Windkraftanlagen, nehmen können.

Vorzugsweise nach bzw. mit Ablauf der technischen Lebensdauer des erfindungsgemäß abzubauenden Epoxid-Hybridharz kann es die vorliegende Erfindung ermöglichen, nicht nur das betreffende Epoxid-Hybridharz abzubauen, sondern auch optional enthaltenes Fasermaterial auf einfache Weise von dem sie durchsetzenden bzw. umhüllenden Epoxid-Hybridharz zu befreien. Die somit ermöglichbare Rückgewinnung von optional enthaltenem Fasermaterial ist ein großer Vorteil der vorliegenden Erfindung. Das erfindungsgemäße Verfahren ist materialschonend, so dass es z.B. möglich ist große Bahnen ggf. eingesetzter Glasfaservliese unversehrt zurückzugewinnen, so dass man diese für andere, anspruchsvolle Zwecke verwenden kann. Hierdurch unterscheidet sich das erfindungsgemäße Verfahren zum Beispiel grundlegend von den bekannten Pyrolyseverfahren, aus denen ggf. eingesetzte Glasfaservliese nur stark verschmutzt oder beschädigt hervorgehen.

Erfindungsgemäß wird das abzubauende Epoxid-Hybridharz mit einem Gemisch aus mindestens einem Alkalimetallalkoholat und mindestens einem Alkohol in Kontakt gebracht. Erfindungsgemäß bevorzugt kann eine Lösung mindestens eines Alkalimetallalkoholates in mindestens einem Alkohol eingesetzt werden. Erfindungsgemäß bevorzugt kann das abzubauende Epoxid-Hybridharz dabei beispielsweise auch ein Bestandteil eines Glasfaser-Verbundwerkstoffes oder Bestandteil eines Objekts sein, welches den Verbundwerkstoff und/oder das abzubauende Epoxid-Hybridharz enthält, wie vorzugsweise als Bestandteil eines Rotorblattes einer Windkraftanlage.

Ein erfindungsgemäß bevorzugtes Verfahren ist dadurch gekennzeichnet, dass das Epoxid- Hybridharz und/oder ein das Epoxid-Hybridharz enthaltendes Objekt, wie z.B. ein Glasfaser-Verbundwerkstoff oder z. B. ein entsprechendes Rotorblatt einer Windkraftanlage, in dem Gemisch aus mindestens einem Alkalimetallalkoholat und mindestens einem Alkohol bewegt und/oder von dem Gemisch aus mindestens einem Alkalimetallalkoholat und mindestens einem Alkohol umspült wird.

So kann es beispielsweise bei Epoxid-Hybridharz enthaltenden Objekten, welche aufgrund ihrer Ausmaße und/oder Form viel Platz erfordern, wie vorzugsweise entsprechenden Rotorblättern von Windkraftanlagen, erfindungsgemäß besonders bevorzugt sein, die betreffenden Objekte in einem geeigneten Behältnis ruhend mit dem Gemisch aus mindestens einem Alkalimetallalkoholat und mindestens einem Alkohol zu umspülen, bevorzugt unter Einsatz von Pumpen und/oder Spüldüsen, die beispielsweise statisch, das heißt ortsfest oder z.B. beweglich ausgelegt sein können.

Ein geeignetes Behältnis könnte z.B. ein Wannen-förmiges Behältnis sein, das das Objekt in einer Weise aufnehmen kann, so dass ein in Kontakt bringen des Gemisches aus mindestens einem Alkalimetallalkoholat und mindestens einem Alkohol mit dem Objekt ermöglicht wird.

Erfindungsgemäß bevorzugt bringt man das Epoxid-Hybridharz beziehungsweise ein das Epoxid-Hybridharz enthaltenes Objekt vorzugsweise unter guter Durchmischung, mit einem Gemisch aus mindestens einem Alkalimetallalkoholat und mindestens einem Alkohol in Kontakt, bevorzugt unter Wärmeeintrag.

Weiterhin ist es erfindungsgemäß bevorzugt, dass dieses "in Kontakt bringen" bei einem Druck im Bereich von 0,5 bar bis 5 bar, weiter bevorzugt 0,8 bis 2 bar, noch weiter bevorzugt 0,9 bis 1,2 bar, vorzugsweise z.B. bei Atmosphärendruck, durchgeführt wird.

Erfindungsgemäß besonders bevorzugt kann das "in Kontakt bringen" ohne zusätzliche Druckbeaufschlagung durchgeführt werden, insbesondere bevorzugt unter Normaldruck, das heißt, bei einem Luftdruck von vorzugsweise 1013,25 hPa durchgeführt werden.

Gemäß einer alternativen bevorzugten Ausführungsform kann es allerdings auch erfindungsgemäß besonders bevorzugt sein, wenn man dieses "in Kontakt bringen" unter Überdruckbedingungen in einem druckfesten Reaktor durchführt, vorzugsweise bei Einsatz solcher Alkohole, die bei Normaldruck (1013,25 hPa) Siedepunkte unterhalb von 100°C aufweisen. Ein bei Einsatz solcher Alkohole, die bei Normaldruck (1013,25 hPa) Siedepunkte unterhalb von 100°C aufweisen, ggf. zu verzeichnender Druckaufbau kann z.B. autogener Natur sein und kann z.B. auf den Dampfdruck der darin involvierten Systemkomponenten zurückgehen. Vorzugsweise kann der Reaktor gewünschtenfalls zudem noch mit einem optionalen Inertgaspolster beaufschlagt werden.

In dem erfindungsgemäßen Verfahren gelangt mindestens ein Alkohol zum Einsatz.

Erfindungsgemäß bevorzugt ist der mindestens eine Alkohol ausgewählt aus der Gruppe bestehend aus linearen Alkanolen, verzweigten Alkanolen und zyklischen Alkanolen, bevorzugt jeweils unabhängig voneinander mit 1 bis 18 Kohlenstoffatomen, weiter bevorzugt jeweils unabhängig voneinander mit 1 bis 10 Kohlenstoffatomen, ganz besonders bevorzugt jeweils unabhängig voneinander mit 1 bis 2 Kohlenstoffatomen, insbesondere bevorzugt werden Methanol und/oder Ethanol eingesetzt.

Erfindungsgemäß bevorzugt wird der mindestens eine Alkohol in einer Gesamt-Menge von 100 bis 2000 Massen-%, bevorzugt von 100 bis 1800 Massen-%, besonders bevorzugt von 110 bis 1700 Massen-%, Massen-% jeweils bezogen auf die Gesamt-Menge des mindestens einen Epoxid-Hybridharzes eingesetzt.

In dem erfindungsgemäßen Verfahren gelangt mindestens ein Alkalimetallalkoholat zum Einsatz. Alkalimetallalkoholate sind dem Fachmann wohlbekannt. Alkalimetallalkoholate sind kommerziell sowohl als Feststoffe als auch in Form ihrer alkoholischen Lösungen erhältlich. Verfahren zur Herstellung von Alkalimetallalkoholaten sind dem Fachmann ebenfalls bekannt, beispielsweise werden in der europäischen Patentanmeldung EP 4 349 884 A1 und zwar dort in den Absätzen [0059] bis [0065] mehrere geeignete Verfahren zur Herstellung von Alkalimetallalkoholaten genannt.

Erfindungsgemäß bevorzugt werden unter Alkalimetallalkoholaten im Rahmen dieser Erfindung vorzugsweise Verbindungen der allgemeinen Formel:

$$[M^+][OR^-]$$

verstanden, wobei

M ein Alkalimetall ist, ausgewählt aus der Gruppe bestehend aus Li, Na und K, bevorzugt steht M für Na oder K, und wobei

R einen linearen, verzweigten oder zyklischen Alkylrest, bevorzugt mit 1 bis 10 Kohlenstoffatomen, besonders bevorzugt mit 1 bis 6 Kohlenstoffatomen, ganz besonders bevorzugt mit 1 oder 2 Kohlenstoffatomen darstellt.

Erfindungsgemäß bevorzugt ist das mindestens eine Alkalimetallalkoholat aus den vorgenannten Verbindungen der allgemeinen Formel $[M^+][OR^-]$ ausgewählt.

Erfindungsgemäß am meisten bevorzugt ist der Einsatz von mindestens einem Alkalimetallalkoholat ausgewählt aus der Gruppe bestehend aus Kaliumethanolat, Natriumethanolat, Kaliummethanolat und Natriummethanolat. Es können ein oder mehrere Alkalimetallalkoholate eingesetzt werden.

Erfindungsgemäß bevorzugt wird das mindestens eine Alkalimetallalkoholat in einer Gesamt-Menge von 1 bis 10 Gewichtsprozent, bevorzugt von 2 bis 7 Gewichtsprozent, besonders bevorzugt von 3 bis 6 Gewichtsprozent, Gewichtsprozent jeweils bezogen auf die Gesamt-Menge des mindestens einen Alkohols eingesetzt.

Ein erfindungsgemäß bevorzugtes Verfahren ist dadurch gekennzeichnet, dass die Kontaktierung des Epoxid-Hybridharzes mit dem Gemisch aus mindestens einem Alkalimetallalkoholat und mindestens einem Alkohol unter Zufuhr von Wärmeenergie (auch "thermische Energie" oder einfach "Wärme" genannt) erfolgt.

Es ist erfindungsgemäß bevorzugt, dass die Kontaktierung des Epoxid-Hybridharzes mit dem Gemisch aus mindestens einem Alkalimetallalkoholat und mindestens einem Alkohol in einem Zeitraum von 1 bis 10 Stunden, besonders bevorzugt in einem Zeitraum von 2 bis 4 Stunden erfolgt.

Es ist erfindungsgemäß bevorzugt, dass die Kontaktierung des Epoxid-Hybridharzes mit dem Gemisch aus mindestens einem Alkalimetallalkoholat und mindestens einem Alkohol in einem Temperaturbereich von 20°C bis 100°C, besonders bevorzugt von 40 bis 85°C erfolgt.

Bei Durchführung des erfindungsgemäßen Verfahrens zum Abbau von Epoxid-Hybridharz kann vorzugsweise eine alkalische, alkoholische Lösung gewonnen werden, die problemlos von gegebenenfalls vorhandenen festen Körpern, wie insbesondere von Glasfaser- und/oder von Carbonfasergeweben, separiert werden kann, beispielsweise durch Abgießen.

Es ist erfindungsgemäß bevorzugt, diese alkalisch-alkoholische Lösung abzutrennen und sie vorzugsweise einer Neutralisation mit Hilfe einer Brönstedsäure, besonders bevorzugt mit Essigsäure, zu unterwerfen und weiterhin ist es erfindungsgemäß bevorzugt, danach das ausgefällte Salz abzutrennen, vorzugsweise durch Dekantieren und/ oder Filtrieren.

Es ist erfindungsgemäß bevorzugt, danach die salzbefreite, alkoholische Lösung einer thermischen Trennung zu unterwerfen und die alkoholische Komponente, vorzugsweise durch Destillation, abzutrennen. Erfindungsgemäß bevorzugt kann man hierbei einen bei T=25°C fließfähigen, aber zähflüssigen Rückstand gewinnen. Rein fakultativ lässt sich besagter Rückstand unter der Einwirkung von Feuchtigkeit optional zu einem polymeren Feststoff vernetzen, welcher nicht mehr in Alkoholen löslich ist.

Ohne an eine bestimmte Theorie gebunden zu sein, gehen die Erfinder davon aus, dass im Rahmen des

erfindungsgemäßen Verfahrens das zuvor in das Epoxid-Hybridharz chemisch eingebundene Siloxan an den SiOSi-Bindungen unter Bildung von SiOC-Bindungen (Si-Alkoxy) gespalten wird.

Die Erfinder gehen, wiederum ohne an eine bestimmte Theorie gebunden zu sein, weiterhin davon aus, dass auf diese Weise ein Epoxidharz entsteht, welches über eine SiC-Bindung sowie eine gegebenenfalls noch Heteroatome wie Sauerstoff aufweisende Kohlenstoffbrücke mit einer Alkoxy-Si-Gruppierung verknüpft ist, die z.B. gewünschtenfalls unter der Einwirkung von Feuchtigkeit, gegebenenfalls bereits durch Einwirkung der Luftfeuchtigkeit, vernetzend kondensiert werden kann.

Erstaunlicherweise wurde im Rahmen der vorliegenden Erfindung gefunden, dass es zum erfindungsgemäßen Abbau, vorzugsweise zur Ab- und/oder Auflösung, des Epoxid-Hybridharzes, insbesondere von einem das Epoxid-Hybridharz enthaltenden Gegenstand, keiner quantitativen Umsetzung bedarf, um zum Beispiel eine vollständige Ablösung des Harzes von einem Glasfaservlies zu erreichen. So ist beispielsweise ein partieller erfindungsgemäßer Abbau, vorzugsweise im Bereich von etwa 50 bis 70 Prozent und betrachtet als Spaltung der im Epoxid-Hybridharz enthaltenen Siloxanylbindungen (SiOSi-Bindungen) bereits vollkommen ausreichend, um z.B. die vollständige Ablösung des Harzes vom Trägermaterial zu erzielen.

Ein erfindungsgemäß bevorzugtes Verfahren ist dadurch gekennzeichnet, dass das erfindungsgemäß abzubauende Epoxid-Hybridharz ein Gießharz, eine Beschichtungsmasse, ein Klebstoff oder ein Komposit-Bauteil oder Bestandteil eines der vorgenannnten ist.

Ein erfindungsgemäß bevorzugtes Verfahren zeichnet sich dadurch aus, dass das erfindungsgemäß abzubauende Epoxid-Hybridharz Bestandteil eines Verbundwerkstoffes ist, welcher neben dem Epoxid-Hybridharz mindestens ein weiteres Material umfasst, vorzugsweise ausgewählt aus der Gruppe bestehend aus Glasfasern, Carbonfasern, Polymerfasern und Metallfasern. Dabei ist es erfindungsgemäß bevorzugt, dass beim oder nach dem Abbau des Epoxid-Hybridharzes das mindestens eine weitere Material, vorzugsweise Glasfasern, abgetrennt und rückgewonnen wird.

Ein erfindungsgemäß bevorzugtes Verfahren ist dadurch gekennzeichnet, dass das erfindungsgemäß abzubauende Epoxid-Hybridharz ein Rotorblatt oder Bestandteil eines Rotorblattes ist.

Die folgenden Beispiele dienen allein zur weiteren Erläuterung der vorliegenden Erfindung und stellen keinerlei Beschränkung der vorliegenden Erfindung dar.

**Beispiele:**

Die $^{29}$Si-NMR-Spektroskopie diente in allen Beispielen der Reaktionsverfolgung.

Die $^{29}$Si-NMR-Proben wurden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in $CDCl_3$ und gegen Tetramethylsilan (TMS) als externem Standard [$\delta(^{29}Si) = 0,0$ ppm] gemessen.

Beispiel 1 (erfindungsgemäß)

Herstellung eines Epoxid-Hybridharzes

4,0 g der kommerziell erhältlichen Epoxidkomponente DIPOXY®-2K-700 Komponente-A (DIPOXY® GERMANY) wurden mit 2,4 g 1,3-(Bis(3-aminopropyl)tetramethyldisiloxan intensiv vermischt. Eine Teilmenge dieser frisch zubereiteten Epoxid-Hybridharzmasse wurde dann auf zwei kantenschlüssig übereinander liegende, rechteckige Glasfaservliese der Abmessung 4 cm x 5 cm aufgetragen, so dass es zu einer möglichst vollständigen, homogenen Durchsetzung des Glasfaserstützgewebes kam. Mit Hilfe zweier, auf Ober- und Unterseite des harzdurchtränkten Glasfaserstützgewebes aufgebrachten, transparenten Polyethylenfolien wurde dann händisch, unter einfachem Druck der Finger, überschüssiges Harz herausgedrückt, wobei dabei besonderes Augenmerk auf das Herausdrücken etwaig eingeschlossener Luftbläschen gerichtet wurde.

Man ließ den so vorkonfektionierten Epoxid-Hybridharz-Glasfaser-Verbundwerkstoff 24 Stunden bei 22°C durchhärten.

a) Auflösung des Epoxid-Hybridharz-Glasfaser-Verbundwerkstoffes zur Rückgewinnung des darin enthaltenen Glasfaservlieses

Der von den Polyethylenfolien befreite Epoxid-Hybridharz-Glasfaser-Verbundwerkstoff wurde in einem 250-ml-Einhalsrundkolben mit 100 g Ethanol und 5,0 g Kaliummethanolat ($KOCH_3$) versetzt. Der Einhalsrundkolben wurde auf die Hohlwelle eines Rotationsverdampfers aufgesteckt und dann unter Rotation für 6 Stunden in ein Ölbad von 80°C abgesenkt. Bereits nach 2stündiger Behandlung konnte man die Ablösung des Epoxid-Hybridharz vom Glasfaservlies unter Delaminierung (Trennen der Glasfaservliesschichten) beobachten. Nach Ablauf der 6 Stunden wurden die separierten Glasfaservliese aus der Lösung entfernt und mit einer kleinen Menge Ethanol gewaschen und danach an

der Luft getrocknet.

Beispiel 2 (erfindungsgemäß)

Herstellung eines Epoxid-Hybridharzes

In Analogie zu dem in Beispiel 1 beschrieben Vorgehen wurde zunächst eine größere Menge des Epoxid-Hybridharzes hergestellt, indem man 8,0 g der kommerziell erhältlichen Epoxidkomponente DIPOXY®-2K-700 Komponente-A (DIPOXY® GERMANY) mit 4,8 g 1,3-Bis(3-aminopropyl)tetramethyldisiloxan intensiv vermischt hatte.

Abweichend zu Beispiel 1 wurde die Epoxid-Hybridharzmasse nicht auf Glasfaservliese aufgetragen, sondern man ließ sie mit einer Schichthöhe von ca. 2 mm in Substanz für 24 Stunden bei 22°C an der Luft durchhärten.

a) Auflösung des Epoxid-Hybridharzes

Die Epoxid-Hybridharzmasse wurde in ca. 5 x 5 mm große Plättchen zerbrochen und diese werden in einem 250-ml-Einhalsrundkolben mit 100 g Ethanol und 5,0 g Kaliummethanolat ($KOCH_3$) versetzt. Der Einhalsrundkolben wurde auf die Hohlwelle eines Rotationsverdampfers aufgesteckt und dann unter Rotation für 6 Stunden in ein Ölbad von 80°C abgesenkt. Bereits nach 2stündiger Behandlung konnte man die vollständige Auflösung des Epoxy-Siloxan-Hybridharzes beobachten. Nach Ablauf der 6 Stunden wurde die leicht gelbliche, alkoholisch-alkalische Lösung durch Zugabe von 5,0 g Essigsäure neutralisiert. Das ausgefällte Salz wurde dann durch Filtration über einen Faltenfilter (MN 615 ¼) von der neutralisierten Lösung abgetrennt.

Unter Anlegen eines Hilfsvakuums (Ölpumpe) wurde Ethanol bei 22°C abgezogen, wobei weiteres Salz nachfiel. Erneute Filtration über einen Faltenfilter (MN 615 ¼) lieferte eine klare Lösung aus der wiederum durch Anlegen eines Hilfsvakuums bei 22°C Ethanol abgezogen wurde. Der dabei entstehende, viskose Rückstand wurde in 10 ml Toluol gelöst und nochmals filtriert. Die toluolische Lösung wurde mit Hilfe eines angelegten Hilfsvakuums weiter eingeengt, bis ein hochviskoser Rückstand isoliert wurde. Begleitende $^{29}Si$-NMR-Spektroskopie zeigte, dass ca. 70% der ursprünglichen Siloxanbindungen aufgespalten wurden und dass aus diesen, am Epoxyharz molekular gebundene Ethoxydimethylsiloxy-Einheiten hervorgegangen waren.

Beispiel 3 (erfindungsgemäß)

a) Herstellung eines, aminofunktionellen Bisphenol A-Derivats als Epoxidkomponente

25 g der kommerziell erhältlichen Epoxidkomponente DIPOXY®-2K-700 Komponente-A (DIPOXY® GERMANY) wurden mit 31,4 g Ethylendiamin (300% Überschuss bezogen auf die Epoxykomponente) in 100 g Toluol intensiv gemischt und dann für 1 Stunde bei 60°C und danach für weitere 2 Stunden bei 80°C gerührt. Am Rotationsverdampfer wurden dann bei 70°C und einem Druck von 5 mbar die Flüchtigen im Laufe einer Stunde destillativ entfernt. Das aminofunktionelle Bisphenol-A-Derivat wurde als eine klare, viskose Flüssigkeit isoliert.

b) Herstellung eines Epoxid-Hybridharzes

Zu dem noch im Einhalskolben des Rotationsverdampfers befindlichen, aminischen Bisphenol-A-Derivat wurden 23,7 g 1,3-Bis(3-glycidyloxypropyl)tetramethyldisiloxan gelöst in 100 ml Toluol hinzugefügt. Man temperierte die farblos-klare Reaktionslösung 3 Stunden lang am Rotationsverdampfer bei 70°C. Nach Ablauf dieser Zeitspanne legte man ein Hilfsvakuum an, wobei sich ein Enddruck von 5 mbar einstellte. Nach ca. 2 Stunden verblieb auf der inneren Kolbenwand eine mechanisch feste, durchgehärtete Epoxid-Hybridharzschicht.

c) Auflösung des Epoxid-Hybridharzes

Die Epoxid-Hybridharzmasse wurde im selben Kolben mit 100 g Ethanol und 5,0 g Kaliummethanolat ($KOCH_3$) versetzt. Der Einhalsrundkolben wurde auf die Hohlwelle eines Rotationsverdampfers aufgesteckt und dann unter Rotation für 6 Stunden in ein Ölbad von 80°C abgesenkt. Bereits nach 4stündiger Behandlung konnte man die vollständige Auflösung des Epoxid-Hybridharzes beobachten. Nach Ablauf der 6 Stunden wurde die leicht gelbliche, alkoholisch-alkalische Lösung durch Zugabe von 5,0 g Essigsäure neutralisiert. Das ausgefällte Salz wurde dann durch Filtration über einen Faltenfilter (MN 615 ¼) von der neutralisierten Lösung abgetrennt.

Unter Anlegen eines Hilfsvakuums (Ölpumpe) wurde Ethanol bei 22°C abgezogen, wobei weiteres Salz nachfiel. Erneute Filtration über einen Faltenfilter (MN 615 ¼) lieferte eine klare Lösung aus der wiederum durch Anlegen eines Hilfsvakuums bei 22°C Ethanol abgezogen wurde. Der dabei entstehende, viskose Rückstand wurde in 10 ml Toluol gelöst

und nochmals filtriert. Die toluolische Lösung wurde mit Hilfe eines angelegten Hilfsvakuums weiter eingeengt, bis ein hochviskoser Rückstand isoliert wurde.

Begleitende $^{29}$Si-NMR-Spektroskopie zeigte, dass ca. 70% der ursprünglichen Siloxanbindungen aufgespalten worden waren und dass aus diesen, am Epoxidharz molekular gebundene Ethoxydimethylsiloxy-Einheiten hervorgegangen waren.

Aufbringen des so isolierten Rückstands auf ein Uhrglas unter Kontaktieren mit Luftfeuchtigkeit führte zu einem glasartig-transparenten, durchgehärteten Polymerüberzug, der sich nicht in Ethanol lösen ließ.

Beispiel 4 (nicht erfindungsgemäßes Vergleichsbeispiel)

Versuch zur Auflösung eines mit einem kommerziellen Epoxidharz getränkten Glasfaserverbundwerkstoffes zur Rückgewinnung des darin enthaltenen Glasfaservlieses

a) Herstellung des Epoxidharz getränkten Glasfaserverbundwerkstoffes

4,0 g der kommerziell erhältlichen Epoxidkomponente DIPOXY®-2K-700 Komponente-A (DIPOXY® GERMANY) wurden mit 2,0 g der Aminkomponente DIPOXY®-2K-700 Komponente-B intensiv vermischt. Eine Teilmenge dieser frisch zubereiteten Epoxid-Harzmasse wurde dann auf zwei kantenschlüssig übereinander liegende, rechteckige Glasfaservliese der Abmessung 4 cm x 5 cm aufgetragen, so dass es zu einer möglichst vollständigen, homogenen Durchsetzung des Glasfaserstützgewebes kommt. Mit Hilfe zweier, auf Ober- und Unterseite des harzdurchtränkten Glasfaserstützgewebes aufgebrachten, transparenten Polyethylenfolien wurde dann händisch, unter einfachem Druck der Finger, überschüssiges Harz herausgedrückt, wobei besonderes Augenmerk auf das Herausdrücken etwaig eingeschlossener Luftbläschen gerichtet wurde.

Man ließ den so vorkonfektionierten Epoxidharz-Glasfaser-Verbundwerkstoff 24 Stunden bei 22°C durchhärten.

b) Versuch zur Auflösung des Epoxidharz getränkten Glasfaserverbundwerkstoffes

Der von den Polyethylenfolien befreite Epoxyharz-Glasfaser-Verbundwerkstoff wurde in einem 250-ml-Einhalsrundkolben mit 100 g Ethanol und 5,0 g Kaliummethanolat ($KOCH_3$) versetzt. Der Einhalsrundkolben wird auf die Hohlwelle eines Rotationsverdampfers aufgesteckt und dann unter Rotation für 6 Stunden in ein Ölbad von 80°C abgesenkt. Es konnten weder Auf- noch Ablösungen des Epoxyharzes noch Delaminiererscheinungen (Trennen der Glasfaservliesschichten) am Glasfaserverbundwerkstoff beobachtet werden.

## Patentansprüche

**1.** Verfahren zum Abbau von Epoxid-Hybridharz, welches mindestens ein chemisch eingebundenes Siloxan aufweist,

wobei das mindestens eine im Epoxid-Hybridharz chemisch eingebundene Siloxan über mindestens zwei SiC-Bindungen in das Epoxid-Hybridharz chemisch eingebunden ist,
und wobei der Siliziumanteil, ausgedrückt in Massenprozent Silizium, bezogen auf das gesamte Epoxid-Hybridharz
1,5 Massenprozent ≤ Siliziumanteil ≤ 10 Massenprozent beträgt,
**dadurch gekennzeichnet, dass** man das Epoxid-Hybridharz mit einem Gemisch aus mindestens einem Alkalimetallalkoholat und mindestens einem Alkohol in Kontakt bringt.

**2.** Verfahren nach Anspruch 1, **dadurch gekennzeichnet, dass** die Kontaktierung des Epoxid-Hybridharzes mit dem Gemisch aus mindestens einem Alkalimetallalkoholat und mindestens einem Alkohol unter Zufuhr von Wärmeenergie erfolgt.

**3.** Verfahren nach Anspruch 1 oder 2, **dadurch gekennzeichnet, dass** das Epoxid- Hybridharz in dem Gemisch aus mindestens einem Alkalimetallalkoholat und mindestens einem Alkohol bewegt wird und/oder von dem Gemisch aus mindestens einem Alkalimetallalkoholat und mindestens einem Alkohol umspült wird.

**4.** Verfahren nach einem der Ansprüche 1 bis 3, **dadurch gekennzeichnet, dass** die Kontaktierung des Epoxid-Hybridharzes mit dem Gemisch aus mindestens einem Alkalimetallalkoholat und mindestens einem Alkohol in einem Zeitraum von 1 bis 10 Stunden, besonders bevorzugt in einem Zeitraum von 2 bis 4 Stunden erfolgt.

**5.** Verfahren nach einem der Ansprüche 1 bis 4, **dadurch gekennzeichnet, dass** die Kontaktierung des Epoxid-Hybridharzes mit dem Gemisch aus mindestens einem Alkalimetallalkoholat und mindestens einem Alkohol in einem Temperaturbereich von 20°C bis 100°C, besonders bevorzugt von 40 bis 85°C erfolgt.

**6.** Verfahren nach einem der Ansprüche 1 bis 5, **dadurch gekennzeichnet, dass** der mindestens eine Alkohol ausgewählt ist aus der Gruppe bestehend aus linearen Alkanolen, verzweigten Alkanolen und zyklischen Alkanolen, bevorzugt jeweils unabhängig voneinander mit 1 bis 18 Kohlenstoffatomen, weiter bevorzugt jeweils unabhängig voneinander mit 1 bis 10 Kohlenstoffatomen, ganz besonders bevorzugt jeweils unabhängig voneinander mit 1 bis 2 Kohlenstoffatomen,
insbesondere bevorzugt werden Methanol und/oder Ethanol eingesetzt.

**7.** Verfahren nach einem der Ansprüche 1 bis 6, **dadurch gekennzeichnet, dass** das mindestens eine Alkalimetallalkoholat

der allgemeinen Formel:

$$[M^+][OR^-]$$

genügt, wobei
M ein Alkalimetall ist, ausgewählt aus der Gruppe bestehend aus Li, Na und K, bevorzugt steht M für Na oder K und wobei
R einen linearen, verzweigten oder zyklischen Alkylrest, bevorzugt mit 1 bis 10 Kohlenstoffatomen, besonders bevorzugt mit 1 bis 6 Kohlenstoffatomen, ganz besonders bevorzugt mit 1 oder 2 Kohlenstoffatomen darstellt, insbesondere bevorzugt ist das mindestens eine Alkalimetallalkoholat ausgewählt aus der Gruppe bestehend aus Kaliummethanolat, Kaliumethanolat, Natriummethanolat und Natriumethanolat.

**8.** Verfahren nach einem der Ansprüche 1 bis 7, **dadurch gekennzeichnet, dass** das Epoxid-Hybridharz das Reaktionsprodukt von mindestens einer Epoxid-Harzmasse und mindestens einem Organopolysiloxan, ausgewählt aus der Gruppe bestehend aus Verbindungen der Formeln (I) und (II)

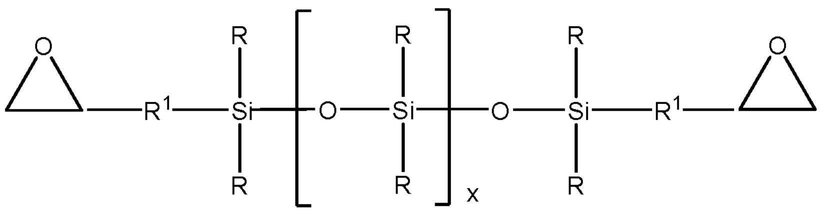

Formel (I),

und

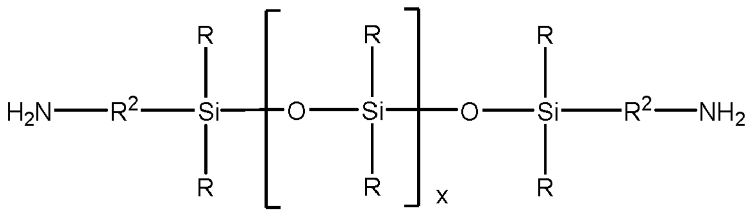

Formel (II),

wobei gilt

R ist jeweils unabhängig voneinander ausgewählt aus der Gruppe bestehend aus aliphatischen und aromatischen Resten, bevorzugt ist R jeweils unabhängig voneinander ausgewählt aus der Gruppe bestehend aus Methyl, Ethyl und Phenyl,
$R^1$ steht jeweils unabhängig voneinander für einen über eine SiC-Bindung an den Organopolysiloxanylrest

gebundenen, zweibindigen, gegebenenfalls auch noch Heteroatome, wie vorzugsweise Sauerstoff und/ oder Stickstoff enthaltenden Kohlenwasserstoffkoppler, der aliphatisch, aliphatisch-cyoaliphatisch oder aromatisch sein kann,
$R^2$ steht jeweils unabhängig voneinander für einen über eine SiC-Bindung an den Organopolysiloxanylrest gebundenen, zweibindigen, gegebenenfalls auch noch Heteroatome, wie vorzugsweise Sauerstoff und/ oder Stickstoff enthaltenden Kohlenwasserstoffkoppler, der aliphatisch, aliphatisch-cyoaliphatisch oder aromatisch sein kann,
und wobei für x, jeweils unabhängig voneinander gilt: $0 \leq x \leq 8$, bevorzugt $0 \leq x \leq 5$, besonders bevorzugt $x = 0$, ist.

**9.** Verfahren nach einem der Ansprüche 1 bis 8, **dadurch gekennzeichnet, dass** das Epoxid-Hybridharz das Reaktionsprodukt von mindestens einer Epoxid-Harzmasse und mindestens einem Organopolysiloxan, ausgewählt aus der Gruppe bestehend aus Verbindungen der Formeln (III), (IV), (V) und (VI)

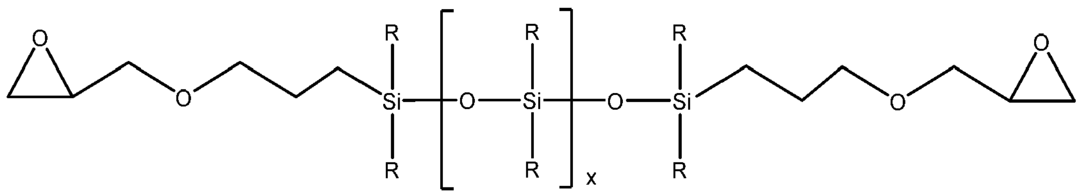

Formel (III),

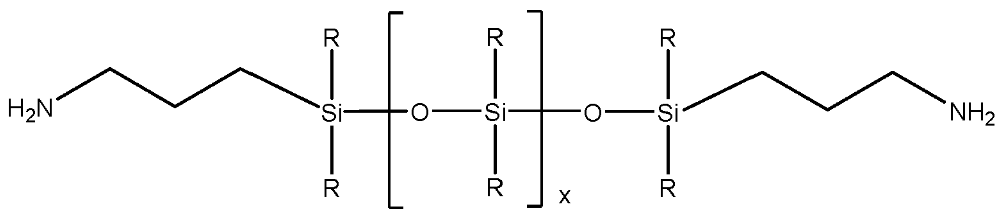

Formel (IV),

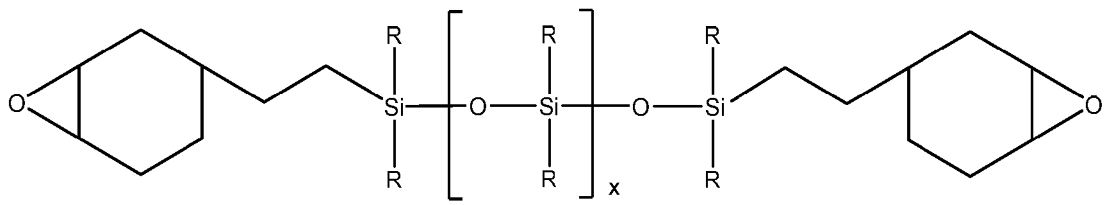

Formel (V)

und

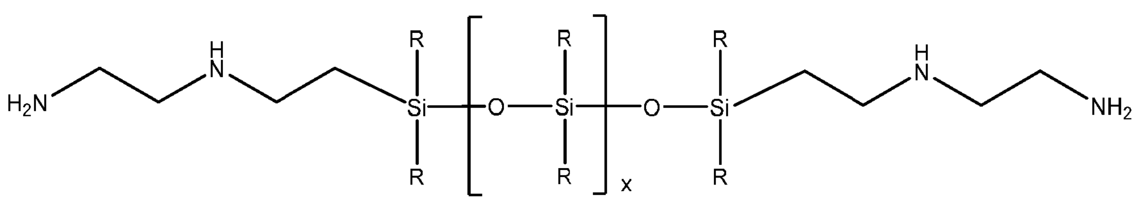

Formel (VI).

wobei gilt

R ist jeweils unabhängig voneinander ausgewählt aus der Gruppe bestehend aus aliphatischen und aromatischen Resten, bevorzugt ist R jeweils unabhängig voneinander ausgewählt aus der Gruppe bestehend aus Methyl, Ethyl und Phenyl,

und wobei für x, jeweils unabhängig voneinander gilt: $0 \leq x \leq 8$, bevorzugt $0 \leq x \leq 5$, besonders bevorzugt $x = 0$, ist.

**10.** Verfahren nach einem der Ansprüche 1 bis 9, **dadurch gekennzeichnet, dass** das Epoxid-Hybridharz ein Gießharz, eine Beschichtungsmasse, ein Klebstoff oder ein Komposit-Bauteil oder Bestandteil eines der vorgenannten ist.

**11.** Verfahren nach einem der Ansprüche 1 bis 10, **dadurch gekennzeichnet, dass** das Epoxid-Hybridharz Bestandteil eines Verbundwerkstoffes ist, welcher neben dem Epoxid-Hybridharz mindestens ein weiteres Material umfasst, vorzugsweise ausgewählt aus der Gruppe bestehend aus Glasfasern, Carbonfasern, Polymerfasern und Metallfasern.

**12.** Verfahren nach Anspruch 11, **dadurch gekennzeichnet, dass** beim oder nach dem Abbau des Epoxid-Hybridharzes das mindestens eine weitere Material, vorzugsweise Glasfasern, abgetrennt und rückgewonnen wird.

**13.** Verfahren nach einem der Ansprüche 1 bis 12, **dadurch gekennzeichnet, dass** das Epoxid-Hybridharz ein Rotorblatt oder Bestandteil eines Rotorblattes ist.

Europäisches Patentamt
European Patent Office
Office européen des brevets

# EUROPÄISCHER RECHERCHENBERICHT

Nummer der Anmeldung
EP 24 21 3820

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2024/294558 A1 (KNOTT WILFRIED [DE] ET AL) 5. September 2024 (2024-09-05)<br>* Anspruch 16 *<br>----- | 1-13 | INV.<br>C08J11/24 |
| A | MINAMI YASUNORI ET AL: "Degradation of stable thermosetting epoxy resins mediated by bases in amide solvents",<br>POLYMER JOURNAL, NATURE PUBLISHING GROUP UK, LONDON,<br>Bd. 57, Nr. 2,<br>18. November 2024 (2024-11-18), Seiten 149-162, XP038059605,<br>ISSN: 0032-3896, DOI: 10.1038/S41428-024-00979-6<br>[gefunden am 2024-11-18]<br>* Seite 152; Tabelle 1 *<br>----- | 1-13 | |
| | | | RECHERCHIERTE SACHGEBIETE (IPC) |
| | | | C08J |

Der vorliegende Recherchenbericht wurde für alle Patentansprüche erstellt

1

| Recherchenort | Abschlußdatum der Recherche | Prüfer |
|---|---|---|
| Den Haag | 30. Juni 2025 | Jansen, Reinier |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 21 3820

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-06-2025

| Im Recherchenbericht angeführtes Patentdokument | Datum der Veröffentlichung | Mitglied(er) der Patentfamilie | Datum der Veröffentlichung |
|---|---|---|---|
| US 2024294558 A1 | 05-09-2024 | CN 118580267 A | 03-09-2024 |
| | | EP 4424760 A1 | 04-09-2024 |
| | | US 2024294558 A1 | 05-09-2024 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9616112 A1
- WO 2023152245 A1
- US 20220356145 A1
- WO 2021140434 A1
- EP 4349884 A1
- EP 4349882 A1


### In der Beschreibung aufgeführte Nicht-Patentliteratur


- **DYLAN S. COUSINS** ; **BIN TAN** ; **JACKSON HOWELL** ; **YASUHITO SUZUKI** ; **JOSEPH R. SAMANIUK** ; **DANIEL M. KNAUSS** ; **JOHN R. DORGAN**. Styrene-Free, Partially Biobased Resin System for Thermoplastic Composites. I. Rheological Properties and Prelimininary Panel Fabrication. *ACS Sustainable Chem. Eng.*, 2019, vol. 7 (7), 6512-6521
- **HAFEEZULLAH MEMON** ; **YI WEI** ; **CHENGYAN ZHU**. *Polymer Testing*, 2022, vol. 105, 107420
- **XIAO WU** ; **XIN YANG** ; **RANG YU** ; **XIAO-JUAN ZHAO** ; **YING ZHANG** ; **WIE HUANG**. A facile access to stiff epoxy vitrimers with excellent mechanical properties via siloxane equilibration. *J. Mater. Chem. A*, 2018, vol. 6, 10184-10188
- **W.W. KLINGLER et al.** Recyclable flame retardant phosphonated epoxy based thermosets enabled via reactive approach. *Chemical Engineering Journal*, 2023, vol. 466, 143051
- Die M-, D-, T-, Q-Nomenklatur zur Beschreibung der Baueinheiten von Organopolysiloxanen ist aus der Literatur bekannt, siehe z.B. **WALTER NOLL**. Chemie und Technologie der Silicone. Verlag Chemie GmbH, 1960, 1-13
- **HENRYK GALINA** ; **HIERONIM MACIEJEWSKI** ; **PIOTR MURIAS**. Epoxy resins modified with reactive low molecular weight siloxanes. *European Polymer Journal*, 2012, vol. 48, 769-773